# EUROPÄISCHE PATENTSCHRIFT

(11) **EP 1 169 156 B1**
(45) Veröffentlichungstag und Bekanntmachung des Hinweises auf die Patenterteilung: **07.01.2004**
(21) Anmeldenummer: 00918699.0
(22) Anmeldetag: 13.03.2000
(51) Int. Cl.: B23K 20/12

(54) **VERFAHREN UND VORRICHTUNG ZUM VERSCHWEISSEN ZWEIER WERKSTÜCKE**
METHOD AND DEVICE FOR WELDING TWO WORK PIECES
PROCEDE ET DISPOSITIF DE SOUDAGE DE DEUX PIECES

(30) Priorität: 24.03.1999 DE 19913324
(43) Veröffentlichungstag der Anmeldung: 09.01.2002
(73) Patentinhaber: Framatome ANP GmbH, 91058 Erlangen (DE)
(72) Erfinder: ENGELHARD, Gerhard, D-91058 Erlangen (DE); BAUER, Rainer, D-91074 Herzogenaurach (DE); PELLKOFER, Dieter, D-91074 Herzogenaurach (DE); ADAMS, Helmar, D-91052 Erlangen (DE)
(74) Vertreter: Mörtel & Höfner
(86) Internationale Anmeldenummer: PCT/DE2000/000784
(87) Internationale Veröffentlichungsnummer: WO 2000/056497

(56) Entgegenhaltungen:
- US-A- 5 697 544
- US-A- 5 713 507
- US-A- 5 971 247

## Beschreibung

Die Erfindung liegt auf dem Gebiet der Verbindungstechnik, und insbesondere der Schweißtechnik.

Die Erfindung bezieht sich auf ein Verfahren zum Verschweißen zweier Werkstücke, die eine Verbindungszone zwischen sich begrenzen. Die Erfindung bezieht sich auch auf eine Vorrichtung zum Verschweißen zweier Werkstücke, die eine Verbindungszone zwischen sich begrenzen, mit einem in die Verbindungszone zustellbaren Reibdorn, sowie auf ein Werkstück.

Zum Fügen zweier Werkstücke, beispielsweise Werkstücke aus Aluminium oder aus einer Aluminiumlegierung, ist es beispielsweise aus der EP 0 615 480 B1 bekannt, das zum Verschweißen an der Stoß-, Füge- oder Verbindungszone der Werkstücke notwendige Plastifizieren oder Aufschmelzen des Grundwerkstoffs durch einen mit Reibung erzeugten Wärmeeintrag herbeizuführen. Hierzu ist ein Reib-Schweißkopf vorgesehen, der einen sich schnell und zyklisch bewegenden, beispielsweise rotierenden, Reibdorn enthält. Dieser Reibdorn besteht aus einem Werkstoff, der härter und höher schmelzend ist als der Werkstoff der zu fügenden Werkstücke. Beim Fügen zweier plattenförmiger Werkstücke wird dieser Reibdorn seitlich im Bereich der Verbindungszone der Werkstücke an die Werkstücke angesetzt. Er dringt dann aufgrund des durch die schnelle und zyklische Bewegung verursachten Plastifizierens des Werkstoffs bei gleichzeitiger Vorwärtsbewegung entlang der Verbindungszone in einander gegenüberliegende Bereiche der Werkstücke ein und bewirkt so beim Abkühlen des plastifizierten Bereichs ein Verschweißen der beiden Werkstücke. Das Verfahren wird auch als Reib-Rühr-Schweißen (Friction Stir Welding) bezeichnet.

Weiterentwicklungen und Abwandlungen des "Friction Stir Welding" sind beschrieben in WO 95/26254 und WO 96/38256.

Häufig müssen Werkstücke miteinander verschweißt werden, bei denen sich die Schweißnaht nicht bis zu einem Randbereich der Werkstücke erstreckt, so daß der Reibdorn - nach einem seitlichen Einbringen in die Werkstücke - diese nicht wieder an einer anderen Stelle seitlich verlassen kann. Beispielsweise müssen plattenförmige Werkstücke nur abschnittsweise entlang einer Stoßkante verschweißt werden, wobei zumindest einer der Abschnitte nicht bis zum Rand der Platten reicht. Bei dieser Anwendung besteht das Problem, daß am Ende einer Schweißnaht aufgrund der Materialverdrängung des Reibdorns beim Herausziehen oder Anheben desselben ein ungewünschtes Loch übrig bleibt.

Dieses Problem besteht auch, falls eine Schweißnaht mit einer in sich geschlossenen Form hergestellt werden soll. Insbesondere besteht es beim (dichten) Verschweißen zweier Rohre, da hierbei der Reibdorn nach einem vollständigen Umlauf entlang des Rohrumfangs wieder zur Startstelle zurückkehrt.

In der deutschen Patentschrift DE 196 16 285 C1 ist vorgeschlagen, den Reibdorn unter Aufrechterhaltung der Umlaufbewegung in Umfangsrichtung langsam aus der Rohrwand herauszuziehen, so daß sich ein keilförmiger Auslauf ergibt. Das beim radialen Abheben entstehende Loch wird damit aber nicht vollständig verhindert. Im Bereich des keilförmigen Auslaufs weisen die verschweißten Rohre häufig eine ungewünschte Wanddikkenverjüngung auf. Gemäß der US-A-5 713 507 wird der Reibdorn in den Schweißkopf zurückgefahren, und somit aus dem Werkstück herausgezogert.

Zum Verschließen einer ungewünschten Bohrung oder eines ungewünschten Lochs in einem Werkstück ist es beispielsweise aus der GB 22 33 923 A bekannt, einen schnell rotierenden Stopfen unter Erzeugung von Reibungswärme in das Loch einzuführen und dieses mit dem Stopfen dicht zu verschließen. Eine derartige Vorgehensweise im Zusammenhang mit dem Verschweißen vieler Rohre wäre aufwendig, da nach jedem vollständigen Umlauf des Reibdorns ein solcher Reibstopfen zugeführt werden müßte, wozu gegebenenfalls eine gesonderte Vorrichtung oder zumindest ein Werkzeugwechsel erforderlich wäre.

Der Erfindung liegt demzufolge die Aufgabe zugrunde, ein Verfahren als auch eine Vorrichtung zum Verschweißen zweier Werkstücke anzugeben, bei denen ein Loch an der Schlußstelle der Schweißnaht, an der ein Anheben des Reibdorns stattfindet, mit geringem technischen Aufwand sicher vermieden ist.

Die verfahrensbezogene Aufgabe wird gemäß der Erfindung dadurch gelöst,
a) daß an einer Startstelle in die Verbindungszone und in einander gegenüberliegende Bereiche der Werkstücke auf beiden Seiten der Verbindungszone ein Reibdorn eingeführt wird,
b) daß der Reibdorn unter Verschweißen der Werkstücke in einer Schweißrichtung entlang der Verbindungszone bewegt wird,
c) daß der Reibdorn nach dem Verschweißen der Werkstücke aus der Verbindungszone herausgeführt und
d) dabei - oder nach einer Vorwärtsbewegung in einem der Werkstücke - unter Anheben in ein Opferelement hineingeführt wird.

Unter einem Opferelement wird in diesem Zusammenhang jedes Element verstanden, das für die Funktion der beiden Werkstücke, beispielsweise zweier Rohre, nicht erforderlich ist. Mit dem Verfahren wird deshalb der Vorteil erreicht, daß das beim Anheben des Reibdorns verbleibende Loch nicht in einem funktionell wichtigen Bereich der Werkstücke entsteht, sondern in dem Opferelement. Beispielsweise ragt das Opferelement über die Außenoberfläche zweier rohrartiger Werkstücke hinaus, so daß bei Entstehen des Lochs im Opferelement die Sollwandstärke der Rohre an keiner Stelle unterschritten wird.

Das Opferelement kann eine beliebige Form, beispielsweise die Form einer Nase, eines Überstands oder eines Fortsatzes, aufweisen.

Der Reibdorn arbeitet insbesondere nach dem Reib-Rühr-Prinzip, mit dem ein Plastifizieren der gegenüberliegenden Bereiche der Werkstücke auf beiden Seiten der Verbindungszone einhergeht.

Unter einem An- oder Abheben des Reibdorns wird im Zusammenhang mit der Erfindung jedes Herausziehen des Reibdorns aus einem der Werkstücke oder aus den Werkstücken verstanden, das zumindest eine Bewegungskomponente in einer zur Richtung der Verbindungszone, also zur Schweißrichtung, senkrechten Richtung aufweist.

Nach einer bevorzugten Ausgestaltung ist das Opferelement einen Opferbereich bildend als Bestandteil eines der Werkstücke an dieses angeformt. Beispielsweise sind der Opferbereich und das Werkstück aus einem einzigen Stück geformt oder hergestellt. Insbesondere ragt der Opferbereich über eine Oberfläche eines der Werkstücke hinaus.

Nach einer anderen bevorzugten Ausgestaltung ist das Opferelement als separater Opferkörper ausgebildet, der an mindestens eines der Werkstücke angrenzend angebracht wird. Ein solcher Opferkörper ist einfach herstellbar und erfordert bei der Herstellung der Werkstücke keinen zusätzlichen Aufwand.

Beispielsweise ist der Opferkörper an seiner Unterseite an die Kontur des Werkstücks angepaßt, so daß sich eine möglichst lückenlose oder spaltfreie Auflage ergibt. Der Opferkörper erstreckt sich - wie auch der Opferbereich - bevorzugt auch in einer Richtung senkrecht zur Schweißrichtung.

Mit besonderem Vorteil besteht der Opferkörper oder der Opferbereich aus dem gleichen Werkstoff wie die Werkstücke. Dadurch ist gewährleistet, daß das ohne Verwendung eines Opferelements in den Werkstücken verbleibende Loch durch Material aus dem Opferelement besonders zuverlässig vermieden oder geschlossen wird.

Vorzugsweise wird das Verfahren bei solchen Werkstücken angewendet, bei denen die Verbindungszone eine in sich geschlossene Form, insbesondere eine Ringform, aufweist. Solche Werkstücke sind beispielsweise Rohre. Hierbei erstreckt sich die Schweißnaht ausgehend von der Startstelle bis zu einer Schlußstelle, wobei die Schlußstelle mit der Startstelle identisch ist. Beispielsweise wird bei Rohren entlang einer vollständigen Umfangslinie (360°) geschweißt.

Bei einer Verbindungszone mit in sich geschlossener Form wird der Reibdorn nach einem vollständigen Durchlaufen der Verbindungszone vorzugsweise über die Startstelle hinaus bewegt. Beim Verschweißen zweier Rohre bedeutet dies, daß der Reibdorn eine Umlaufbewegung von mehr als 360°, also über die Schlußstelle hinaus, durchführt.

Dabei ergibt sich beispielsweise ein Abschnitt der Verbindungszone, der mehrfach vom Reibdorn durchlaufen wird. Durch einen solchen Überlapp, der beispielsweise an einer Maschine eingestellt ist, ist die Fehlertoleranz des Verfahrens vorteilhaft erhöht.

Insbesondere ist das Opferelement - in Schweißrichtung gesehen - hinter der Startstelle, die insbesondere mit der Schlußstelle identisch ist, angebracht.

Nach einer besonders bevorzugten Ausgestaltung wird bei einer Verbindungszone mit einer in sich geschlossenen Form der Opferkörper an der Startstelle oder an einer bereits vom Reibdorn passierten Stelle angebracht, nachdem der Reibdorn bereits in Schweißrichtung bewegt wurde. Der Opferkörper wird z.B. zu einem Zeitpunkt angebracht, zu dem ausreichend Platz zu seinem Anbringen über der Startstelle oder über einer bereits vom Reibdorn passierten Stelle vorhanden ist.

Bei einer derartigen Vorgehensweise läuft der Reibdorn nach einem vollständigen Umlauf quasi automatisch in den Opferkörper hinein, ohne daß eine Änderung seiner (azimuthalen) Bewegungsrichtung oder eine zusätzliche Bewegung erforderlich wären.

Alternativ wird der Opferkörper - in Schweißrichtung gesehen - seitlich neben der Startstelle oder neben einer bereits vom Reibdorn passierten Stelle angebracht, nachdem der Reibdorn bereits in Schweißrichtung bewegt wurde. Hierbei ist nach einem vollständigen Umlauf des Reibdorns unter Umständen eine Beendigung oder Änderung der azimuthalen Fortbewegung des Reibdorns derart erforderlich, daß der Reibdorn in den seitlich neben der Startstelle oder neben der bereits vom Reibdorn passierten Stelle nach einer Vorwärtsbewegung in einem der Werkstücke in den Opferkörper hinein bewegt wird.

Nach einer anderen besonders bevorzugten Ausgestaltung ist das Opferelement an die Verbindungszone unmittelbar angrenzend angebracht. Damit wird der Vorteil erreicht, daß nach einem vollständigen Verschweißen entlang der Verbindungszone der Reibdorn ohne Zeitverlust in das Opferelement hineinführbar ist. Gegebenenfalls ist dann eine gesonderte Vorwärtsbewegung in einem der Werkstücke nicht erforderlich, und das Anheben des Reibdorns beim Hineinführen in das Opferelement kann während des Herausführens aus der Verbindungszone stattfinden.

Um Zeitverluste gering zu halten, ist das Opferelement zumindest in einem Abstand zur Verbindungszone von weniger als dem Durchmesser des Reibdorns angebracht.

Nach einer anderen bevorzugten Ausgestaltung ist das Opferelement - in Schweißrichtung gesehen - seitlich neben der Verbindungszone angebracht. Diese Ausgestaltung ist insbesondere von Vorteil, falls das Opferelement als Opferbereich Bestandteil eines der Werkstücke ist. Der Opferbereich ist dann beabstandet zur Verbindungszone besonders einfach anformbar, ohne daß er ein Positionieren der zu verschweißenden Werkstücke entlang der Verbindungszone und/oder die Bewegung des Reibdorns behindern würde.

Bei einer bevorzugten Weiterbildung des Verfahrens wird das Opferelement nach dem Verschweißen der Werkstücke entfernt. Das Entfernen oder Abtragen des Opferelements, nachdem der Reibdorn aus ihm herausgeführt ist, kann z.B. durch Fräsen oder Schneiden geschehen.

Eine andere bevorzugte Weiterbildung sieht vor, daß während des Anhebens des Reibdorns eine Vorschubbewegung des Reibdorns aufrechterhalten wird. Durch die Überlagerung der beiden Bewegungen ergibt sich eine besonders saubere Auslaufstelle.

Vorzugsweise ist die Höhe des Opferelements bezüglich der es umgebenden Oberfläche des Werkstücks oder der Werkstücke größer als die erzeugte Schweißnahttiefe. Da die erzeugte Schweißnahttiefe mit der Höhe des Reibdorns (eintauchende Reibfläche) in Zusammenhang steht, ist damit sichergestellt, daß der gesamte eintauchende Reibdorn vom Opferelement aufgenommen werden kann.

Insbesondere ist hierbei unter "Höhe" die Höhe senkrecht zur Oberfläche der Werkstücke zu verstehen. Beispielsweise ragt das Opferelement mit dieser Höhe senkrecht zur Schweißrichtung über die Verbindungszone hinaus.

Nach einer anderen äußerst bevorzugten Ausgestaltung ist die Höhe des Opferelements bezüglich der es umgebenden Oberfläche des Werkstücks oder der Werkstücke räumlich veränderlich. Dadurch wird insbesondere in Verbindung mit einer aus Anheben und Vorschubbewegung überlagerten Gesamtbewegung des Reibdorns ein einfacher und sauberer Übergang von der Verbindungszone in das Opferelement erreicht. Insbesondere nimmt die Höhe (stetig) entlang einer Richtung zu, die der Richtung der Vorschubbewegung des Reibdorns parallel ist.

Gemäß einer anderen bevorzugten Ausgestaltung wird der Reibdorn demzufolge in das Opferelement in Richtung zunehmender Höhe des Opferelements hineingeführt.

Beispielsweise ist das Opferelement keilförmig. Beim Verschweißen zweier Rohre ist die Form des Keils insbesondere derart, daß seine Ober- oder Außenseite zumindest teilweise tangential zum Außenumfang der Rohre verläuft.

Der Reibdorn wird vorzugsweise der Kontur des Opferelements folgend gesteuert angehoben oder zurückgezogen.

Die vorrichtungsbezogene Aufgabe wird bezogen auf die Vorrichtung der eingangs genannten Art dadurch gelöst, daß eine Steuereinrichtung vorhanden ist, mit der der Reibdorn gesteuert aus dem Werkstück oder den Werkstücken zurückziehbar ist, und mit der gleichzeitig eine Vorschubbewegung des Reibdorns ausführbar ist.

Die Vorrichtung ist insbesondere zur Durchführung des Verfahrens nach der Erfindung geeignet. Von besonderem Vorteil ist dabei die Verwendung der Vorrichtung, falls ein Opferelement mit räumlich veränderlicher Höhe verwendet wird.

Vorzugsweise ist der Reibdorn in Abhängigkeit des in Vorschubrichtung zurückgelegten Wegs automatisiert zurückziehbar.

Eine vorteilhafte Weiterbildung der Vorrichtung weist einen den Weg abtastenden und die Zurückziehbewegung oder das Anheben des Reibdorns steuernden Tastkörper auf.

Der Tastkörper und der Reibdorn stehen vorzugsweise über einen Steuerzylinder in Verbindung.

Bevorzugt ist der Reibdorn einer der Steuereinrichtung fest aufgeprägten Steuerkurve folgend zurückziehbar. Die Steuerkurve kann mechanisch oder elektronisch realisiert sein.

Nach einer ganz besonders bevorzugten Ausgestaltung repräsentiert die Steuerkurve die Kontur eines Opferelements.

Die Erfindung bezieht sich auch auf einen Opferkörper zur Durchführung des Verfahrens. Der Opferkörper ist insbesondere ein separater Körper, der an mindestens eines der Werkstücke anlegbar ist. Mögliche Ausgestaltungen und Vorteile des Opferkörpers sind der Beschreibung des Verfahrens nach der Erfindung entnehmbar.

Weiterhin bezieht sich die Erfindung auch auf ein Werkstück mit einem Opferbereich zur Durchführung des Verfahrens nach der Erfindung. Insbesondere ist der Opferkörper als Bestandteil eines der Werkstücke an dieses angeformt.

Vorteilhafte Ausgestaltungen des Opferbereichs ergeben sich ebenfalls aus der Beschreibung des Verfahrens nach der Erfindung.

Mehrere Ausführungsbeispiele eines Verfahrens und einer Vorrichtung nach der Erfindung werden nachfolgend anhand der Figuren 1 bis 11 näher erläutert. Es zeigen:
- FIG 1: ein erstes Ausführungsbeispiel eines Verfahrens nach der Erfindung,
- FIG 2: ein zweites Ausführungsbeispiel eines Verfahrens nach der Erfindung,
- FIG 3: ein drittes Ausführungsbeispiel eines Verfahrens nach der Erfindung,
- FIG 4: ein viertes Ausführungsbeispiel eines Verfahrens nach der Erfindung zu einem ersten Zeitpunkt,
- FIG 5: das Ausführungsbeispiel der Figur 4 zu einem späteren Zeitpunkt,
- FIG 6: ein fünftes Ausführungsbeispiel eines Verfahrens nach der Erfindung zu einem ersten Zeitpunkt,
- FIG 7: das Ausführungsbeispiel der Figur 6 zu einem späteren zweiten Zeitpunkt,
- FIG 8: das Ausführungsbeispiel der Figuren 6 und 7 zu einem späteren dritten Zeitpunkt,
- FIG 9: ein erstes Ausführungsbeispiel einer Vorrichtung nach der Erfindung,
- FIG 10: ein zweites Ausführungsbeispiel einer Vorrichtung nach der Erfindung in einer Längsschnittdarstellung entlang der Werkstücke und
- FIG 11: das Ausführungsbeispiel der Figur 10 in einer Querschnittsdarstellung bezüglich der Werkstücke.

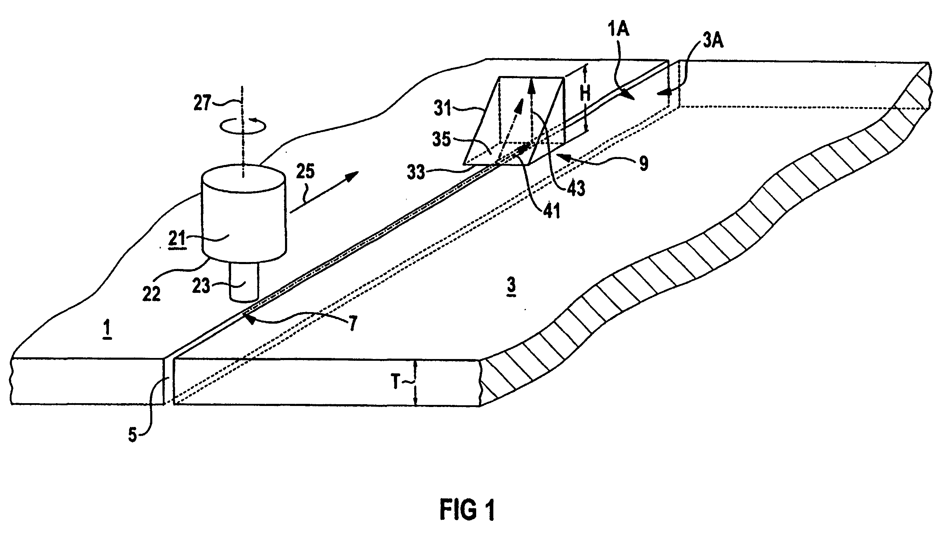

Figur 1 zeigt plattenförmige Werkstücke 1, 3, die entlang ihrer Seitenflächen 1A, 3A aufeinanderstoßend angeordnet sind und durch diese Seitenflächen 1A, 3A eine Verbindungszone 5 zwischen den Werkstücken 1, 3 begrenzen. Die Werkstücke 1, 3 können sich mit ihren Seitenflächen 1A, 3A weitgehend spaltfrei berühren oder einen z.B. fertigungstechnisch bedingten (aber ungewünschten) kleinen Freiraum zwischen ihren Seitenflächen 1A, 3A aufweisen.

Die Werkstücke 1, 3 sollen entlang ihrer Verbindungszone 5 beginnend an einer Startstelle 7 bis zu einer vom Rand der Werkstücke 1, 3 beabstandeten Schlußstelle 9 miteinander verschweißt werden. Hierzu wird ein nach dem Reib-Rühr-Schweißprinzip arbeitender Schweißkopf 21 mit einem Reibdorn 23 an der Startstelle 7 in die Verbindungszone 5 und in einander gegenüberliegende Bereiche oder Zonen der Werkstücke 1, 3 auf beiden Seiten der Verbindungszone 5 eingeführt. Der Reibdorn 23 wird nach Erreichen einer vorgegebenen Eindringtiefe in Schweißrichtung 25 entlang der Verbindungszone 5 bewegt.

Der Reibdorn 23 wird beim Einführen und beim Vorwärtsbewegen durch einen nicht explizit dargestellten motorischen Antrieb in schnelle Rotation um eine Drehachse 27 gebracht. Durch gleichzeitig aufgebrachten Druck des Reibdorns 23 auf die Verbindungszone 5 der beiden aneinanderliegenden Werkstücke 1, 3 wird der Werkstoff erwärmt und plastifiziert. Der Schweißkopf 21 weist hierzu einen Anlegeschulter 22 auf. Der plastifizierte Werkstoff wird durch die Rotationsbewegung zur Rückseite des Reibdorns 23 transportiert und durch die Anlegeschulter 22 und eine nicht dargestellte Profilierung des Reibdorns 23 zusammengepreßt. Beim Abkühlen entsteht eine feste Verbindung, ohne daß der Schmelzpunkt erreicht wurde.

Nach Bewegung in Schweißrichtung 25 ist an der Schlußstelle 9 ein Entfernen des Reibdorns 23 aus der Verbindungszone 5 und den Werkstücken 1, 3 erforderlich. Aufgrund der Materialverdrängung durch den Reibdorn 21 entstünde an der Schlußstelle 9 hierbei ein Loch, das mit einem Zusatzwerkstoff verfüllt werden müßte.

Erfindungsgemäß ist deshalb an der Schlußstelle 9 ein keilförmiger Opferkörper 31 angeklemmt, angepreßt oder angeschweißt, der nach dem Aneinanderpressen der Werkstücke 1, 3 auf diese aufgelegt wurde. Der Opferkörper 31 ist mit seiner Spitze 33 dem sich auf ihn zu bewegenden Schweißkopf 21 zugewandt. Mit seiner Unterseite 35 liegt der Opferkörper die Verbindungszone 5 überdeckend auf beiden Werkstücken 1, 3 auf.

Die maximale Höhe H des Opferkörpers 31 ist größer als die Schweißnahttiefe T, so daß der Reibdorn 23 vollständig vom Opferkörper 31 einschließbar ist.

Der Reibdorn 23 wird in den Opferkörper 31 in Richtung zunehmender Höhe H des Opferkörpers 31 hineingeführt. Dabei ist einer anhaltenden Vorschubbewegung 41 entlang der Verbindungszone 5 eine - zum Anheben des Reibdorns 23 bezüglich der Werkstückoberflächen führende - Zurückziehbewegung 43 überlagert. Mit anderen Worten: Der Reibdorn 23 wird der Kontur des Opferkörpers 31 folgend angehoben, bis seine untere Spitze nicht mehr in die Verbindungszone 5 oder eines der Werkstücke 1, 3 eintaucht.

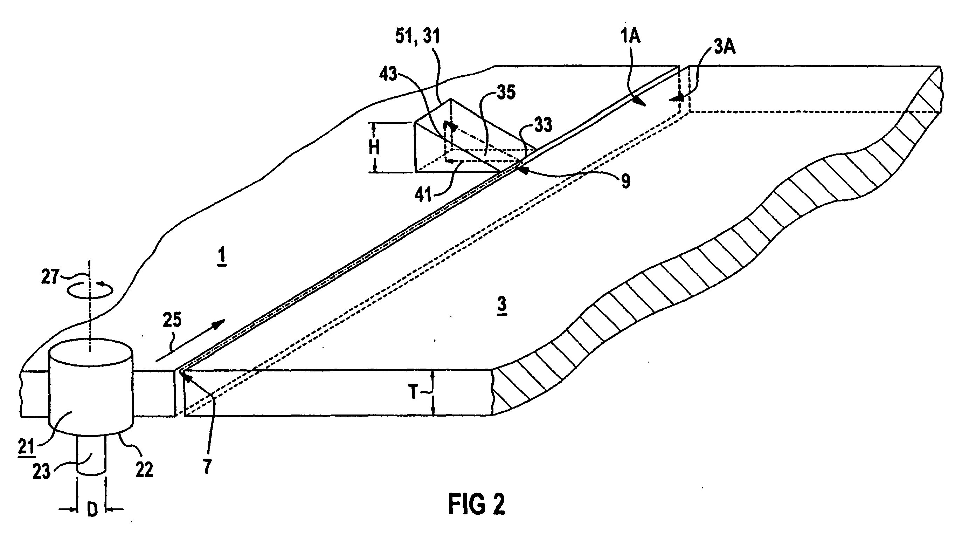

Bei dem in Figur 2 dargestellten zweiten Ausführungsbeispiel ist der Opferkörper 31 in Schweißrichtung 25 gesehen seitlich neben der Verbindungszone 5 angebracht und grenzt mit seiner Spitze 33 unmittelbar an diese an. Anstelle des Opferkörpers 31 kann an eines der Werkstücke 1, 3 ein Opferbereich 51 als Bestandteil eines dieser Werkstücke 1, 3 angeformt sein. Der Opferkörper 31 und der Opferbereich 51 werden nachfolgend zusammenfassend als Opferelement bezeichnet.

In Figur 2 ist das Opferelement 31, 51 bezüglich der Anordnung der Figur 1 um 90° gedreht. Nachdem der Reibdorn 23 bis zur Schlußstelle 9 bewegt wurde, findet eine um 90° diesbezüglich gedrehte Vorschubbewegung 41 in das Opferelement 31, 51 hinein statt. Der Vorschubbewegung 41 ist - wie beim ersten Ausführungsbeispiel - eine Zurückziehbewegung 43 überlagert, so daß die Anlegeschulter 22 dem keilförmigen Verlauf des Opferelements 31, 51 folgt.

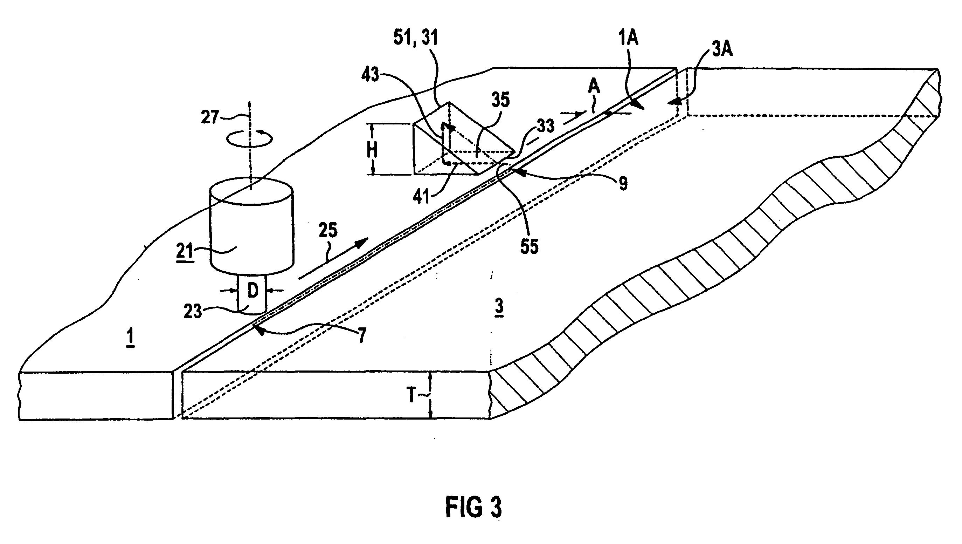

Das in Figur 3 dargestellte dritte Ausführungsbeispiel entspricht weitgehend dem in Figur 2 dargestellten Ausführungsbeispiel, mit dem Unterschied, daß das Opferelement 31, 51 in einem Abstand A zur Verbindungszone 5 von weniger als dem Durchmesser D des Reibdorns 23 angebracht ist. Wie in Figur 2 wird die Bewegungsrichtung des Reibdorns 23 nach Erreichen der Schlußstelle 9 um 90° geschwenkt, und der Reibdorn 23 wird aus der Verbindungszone 5 herausgeführt. Im Gegensatz zu Figur 2 setzt die Zurückziehbewegung 43 nicht unmittelbar bei Beginn des Verlassens der Verbindungszone 5 ein. Vielmehr findet zunächst eine Vorwärtsbewegung 55 in nur einem der Werkstücke 1 statt, bis der Reibdorn 23 die Spitze 33 des Opferelements 31, 51 erreicht. Erst danach setzt das Anheben des Reibdorns 23 infolge der Zurückziehbewegung 43 und unter gleichzeitiger Aufrechterhaltung der Vorschubbewegung 41 ein.

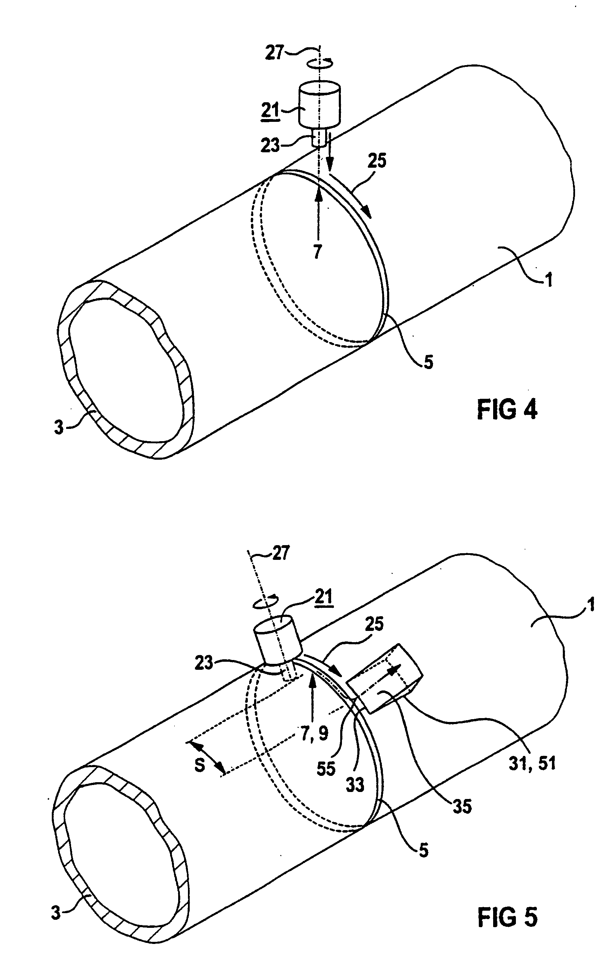

Beim vierten Ausführungsbeispiel der Figur 4 sind die Werkstücke 1, 3 rohrartige Gebilde, so daß die Verbindungszone 5 eine in sich geschlossene Form, und zwar eine Ringform, aufweist. Es wird eine Rundschweißnaht hergestellt. Zu dem in Figur 4 dargestellten ersten Zeitpunkt wird der Schweißkopf 21 mit dem Reibdorn 23 an der Startstelle 7 in die Verbindungszone 5 radial eingeführt, d.h. zugestellt, und beginnt entlang der Schweißrichtung 25 in Umfangsrichtung mit dem Verschweißen der Werkstücke 1, 3 entlang der Verbindungszone 5.

Zu einem in Figur 5 dargestellten späteren Zeitpunkt hat der Reibdorn 23 nach einem vollständigen Umlauf von 360° beinahe wieder die Schlußstelle 9 erreicht, die mit der Startstelle 7 übereinstimmt. Der Reibdorn 23 wird aber noch um eine Strecke S über die Startstelle 7 hinausbewegt, bis er in zu Figur 3 analoger Weise in das Opferelement 31, 51 eingeführt wird. Die Strecke S wird hierbei also mehrfach vom Reibdorn 23 durchlaufen, wodurch mit großer Fehlertoleranz sichergestellt ist, daß eine vollständige Umfangslinie fluiddicht geschweißt wurde. Die Strecke S ist mindestens so groß wie der Durchmesser D des Reibdorns 22.

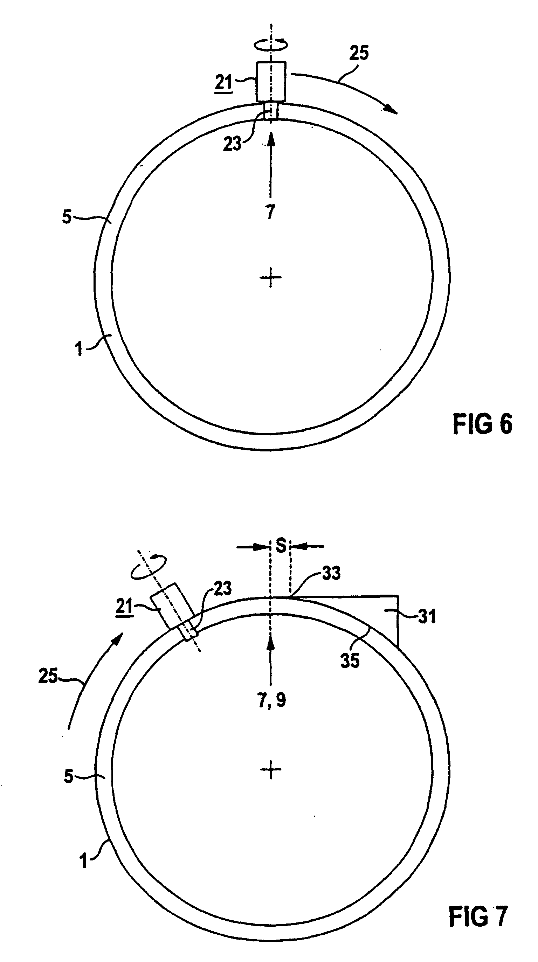

Figur 6 zeigt ein fünftes Ausführungsbeispiel, bei dem die Werkstücke 1, 3 ebenfalls Rohre sind, welche im Leitungsquerschnitt dargestellt sind. Zu dem in Figur 6 dargestellten ersten Zeitpunkt ist der Reibdorn 23 bereits in die Wand der Werkstücke 1, 3 an der Startstelle 7 eingeführt und beginnt mit der Bewegung entlang der Schweißrichtung 25.

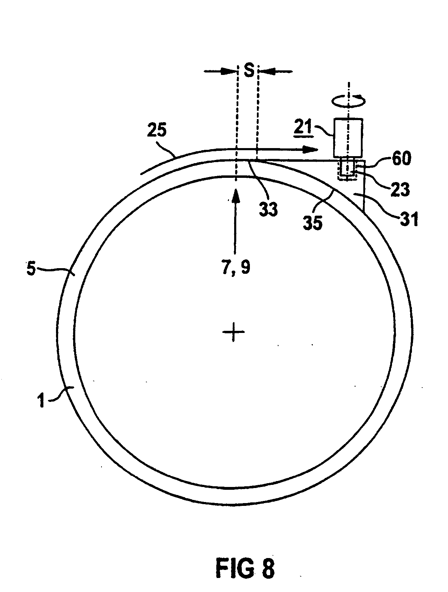

Figur 7 zeigt den Schweißkopf zu einem zweiten Zeitpunkt, kurz bevor er die Startstelle 7 nach einem vollständigen Umlauf erneut erreicht. Zwischen dem ersten Zeitpunkt der Figur 6 und dem zweiten Zeitpunkt der Figur 7 wurde der Opferkörper 31 (Auslaufkeil) an die Werkstücke 1, 3 angebracht, nachdem der Reibdorn 23 diese Stelle bereits passiert hatte. Der Reibdorn 23 läuft deshalb unter Beibehaltung seiner Umlaufbewegung direkt in den Opferkörper 31 hinein, was in Figur 8 dargestellt ist. Wie in den vorangegangenen Ausführungsbeispielen findet hierzu bei Erreichen der Spitze 33 des Opferkörpers 31 die Zurückziehbewegung 43 statt. Wie außerdem in Figur 5 in analoger Weise dargestellt, wird der Opferkörper 31 in Schweißrichtung 25 gesehen hinter der Startstelle 7 angebracht, so daß zwischen der Startstelle 7 (identisch mit der Schlußstelle 9) und der Spitze 33 eine die Fehlertoleranz erhöhende mehrfach durchlaufene Strecke S gebildet ist.

Der keilförmige Opferkörper 31 ist mit seiner Unterseite an die Rohrkrümmung angepaßt.

Figur 8 zeigt, wie die Vorschubbewegung 41 und die Zurückziehbewegung 43 (Figuren 1 bis 3) insgesamt zu einem tangentialen Auslaufen aus den Werkstücken 1, 3 und der Verbindungszone 5 überlagert ist. Nach diesem Auslaufen wir der Reibdorn 23 aus dem Opferkörper 31 entfernt, so daß ein Auslaufloch 60 zurückbleibt, welches ohne angesetzten Opferkörper 31 in der Rohrwandung der Werkstücke 1, 3 entstanden wäre.

Nach Entfernen des Reibdorns 23 aus dem Opferkörper 31 wird dieser abgefräst, bis an dieser Stelle eine glatte kreisförmige Außenkontur gebildet ist.

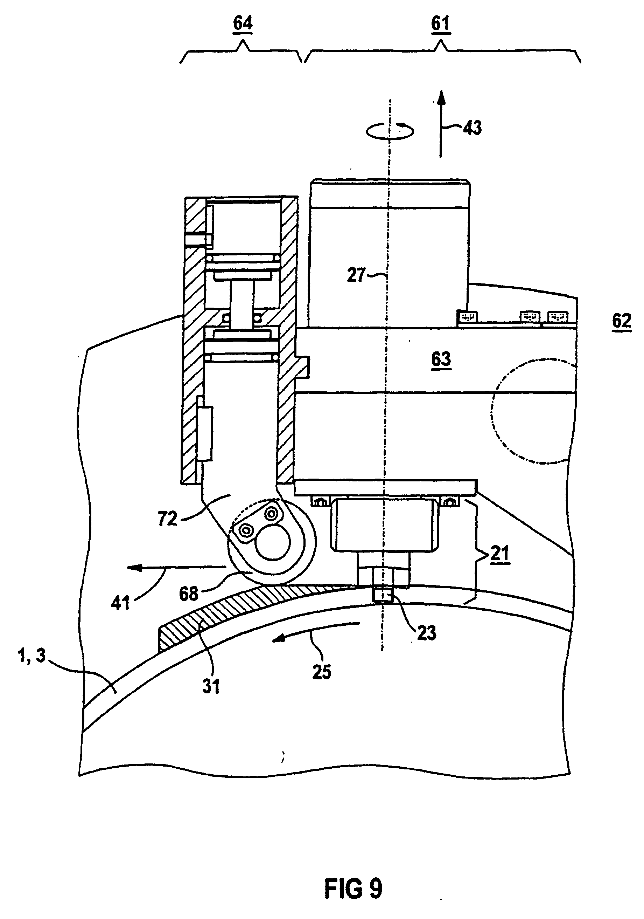

Figur 9 zeigt ein erstes Ausführungsbeispiel einer Vorrichtung 62 nach der Erfindung, die eine Schweißeinheit 61 und eine Steuereinrichtung 64 aufweist. Die Schweißeinheit 61 umfaßt eine Antriebseinheit 63 sowie den hiervon angetriebenen Schweißkopf 21 mit dem Reibdorn 23. Mit der Steuereinrichtung 64 ist der Reibdorn 23 gesteuert aus dem Werkstück 1, 3 oder den Werkstücken 1, 3 zurückziehbar (Zurückziehbewegung 43), wobei gleichzeitig eine Vorschubbewegung 41 ausführbar ist.

Gemäß Figur 9 umfaßt die Steuereinrichtung 64 einen als Rad ausgebildeten Tastkörper 68, mit dem der in Vorschubrichtung 41 zurückgelegte Weg abtastbar ist. Die Bewegung des Tastkörpers 68 ist über einen Steuerzylinder 72 auf den Schweißkopf 21 und somit auf den Reibdorn 23 übertragbar. Auf diese Weise ist mit dem Tastkörper 68 die Zurückziehbewegung 43 des Reibdorns 23 steuerbar.

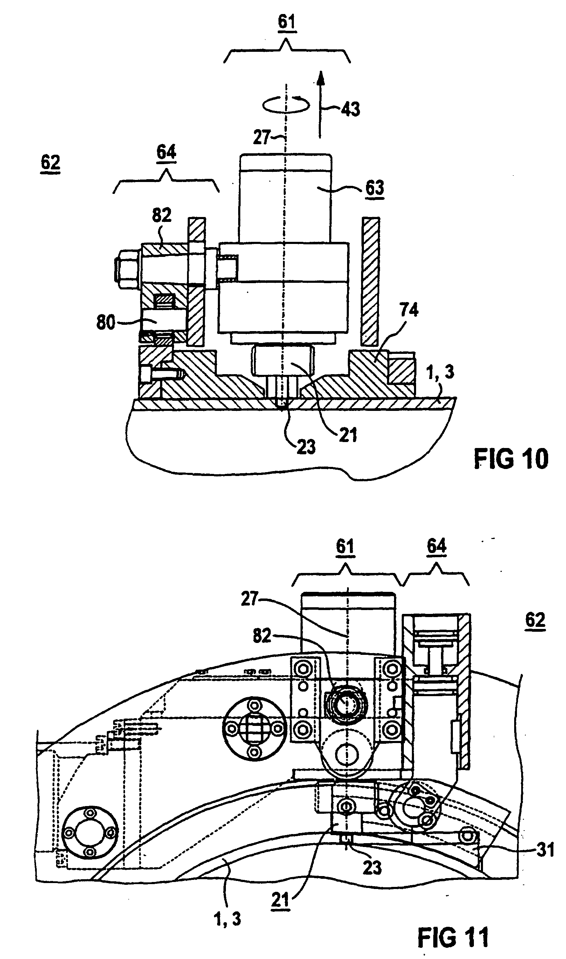

Figur 10 zeigt ein zweites Ausführungsbeispiel einer Vorrichtung 62 nach der Erfindung. Aus der Längsschnittdarstellung entlang der Rohre 1, 3 der Figur 10 wird auch ersichtlich, daß der Schweißkopf 21 entlang einer Führungsschiene 74 in Umfangsrichtung der Rohre geführt ist.

Bei dem in Figur 10 - und in Figur 11 im Querschnitt der Werkstücke 1, 3 (Rohre) - dargestellten Ausführungsbeispiel ist die Zurückziehbewegung 43 über eine Steuerkurve 80 gesteuert, die der Steuereinrichtung 64 fest aufgeprägt ist. Die Steuerkurve 80 repräsentiert die Kontur des Opferkörpers 31, so daß durch Überlagerung der Vorschubbewegung 41 und der Zurückziehbewegung 43 der Reibdorn 23 der Kontur des Opferkörpers 31 folgend gesteuert anhebbar ist. Die Steuerkurve 80 steht über einen Steuerschieber 82 mit der Schweißmaschine 63 in Verbindung.

## Patentansprüche

1. Verfahren zum Verschweißen zweier Werkstücke (1, 3), die eine Verbindungszone (5) zwischen sich begrenzen,
a) wobei an einer Startstelle (7) in die Verbindungszone (5) und in einander gegenüberliegende Bereiche der Werkstücke (1, 3) auf beiden Seiten der Verbindungszone (5) ein Reibdorn (23) eingeführt wird,
b) wobei der Reibdorn (23) unter Verschweißen der Werkstücke (1, 3) in einer Schweißrichtung (25) entlang der Verbindungszone (5) bewegt wird,
c) wobei der Reibdorn (23) nach dem Verschweißen der Werkstücke (1, 3) aus der Verbindungszone (5) herausgeführt und **dadurch gekennzeichnet, daß**
d) dabei - oder nach einer Vorwärtsbewegung (55) in einem der Werkstücke (1, 3) - unter Anheben (43) in ein Opferelement (31, 51) hineingeführt wird.

2. Verfahren nach Anspruch 1,
**dadurch gekennzeichnet, daß** das Opferelement einen Opferbereich (51) bildend als Bestandteil eines der Werkstücke (1, 3) an dieses angeformt ist.

3. Verfahren nach Anspruch 1,
**dadurch gekennzeichnet, daß** das Opferelement als separater Opferkörper (31) ausgebildet ist, der an mindestens eines der Werkstücke (1, 3) angrenzend angebracht wird.

4. Verfahren nach einem der Ansprüche 1 bis 3,
**dadurch gekennzeichnet, daß** die Verbindungszone (5) eine in sich geschlossene Form, insbesondere eine Ringform, aufweist (Figuren 4 bis 8).

5. Verfahren nach Anspruch 4,
**dadurch gekennzeichnet, daß** der Reibdorn (23) nach einem vollständigen Durchlaufen der Verbindungszone (5) über die Startstelle (7) hinaus bewegt wird.

6. Verfahren nach Anspruch 4 oder 5,
**dadurch gekennzeichnet, daß** das Opferelement (31, 51) - in Schweißrichtung (25) gesehen - hinter der Startstelle (7) angebracht ist (Figuren 5, 7).

7. Verfahren nach Anspruch 3 und nach einem der Ansprüche 4 bis 6,
**dadurch gekennzeichnet, daß** der Opferkörper (31) an der Startstelle (7) oder an einer bereits vom Reibdorn (23) passierten Stelle angebracht wird, nachdem der Reibdorn (23) bereits in Schweißrichtung (25) bewegt wurde (Figur 7).

8. Verfahren nach Anspruch 3 und nach einem der Ansprüche 4 bis 6,
**dadurch gekennzeichnet, daß** der Opferkörper (31) - in Schweißrichtung (25) gesehen - seitlich neben der Startstelle (7) oder neben einer bereits vom Reibdorn (23) passierten Stelle angebracht wird, nachdem der Reibdorn (23) bereits in Schweißrichtung (25) bewegt wurde. (Figur 5).

9. Verfahren nach einem der Ansprüche 1 bis 8,
**dadurch gekennzeichnet, daß** das Opferelement (31, 51) in einem Abstand (A) zur Verbindungszone (5) von weniger als dem Durchmesser (D) des Reibdorns (23) oder an die Verbindungszone (5) unmittelbar angrenzend angebracht ist.

10. Verfahren nach einem der Ansprüche 1 bis 9,
**dadurch gekennzeichnet, daß** das Opferelement (31, 51) - in Schweißrichtung (25) gesehen - seitlich neben der Verbindungszone (5) angebracht ist (Figuren 2, 3, 5).

11. Verfahren nach einem der Ansprüche 1 bis 10,
**dadurch gekennzeichnet, daß** das Opferelement (31, 51) nach dem Verschweißen der Werkstücke (1, 3) entfernt wird.

12. Verfahren nach einem der Ansprüche 1 bis 11,
**dadurch gekennzeichnet, daß** während des Anhebens (43) des Reibdorns (23) eine Vorschubbewegung (41) des Reibdorns (23) aufrechterhalten wird.

13. Verfahren nach einem der Ansprüche 1 bis 12,
**dadurch gekennzeichnet, daß** die Höhe (H) des Opferelements (31, 51) bezüglich der es umgebenden Oberfläche des Werkstücks (1, 3) oder der Werkstücke (1, 3) größer als die erzeugte Schweißnahttiefe (T) ist.

14. Verfahren nach einem der Ansprüche 1 bis 13,
**dadurch gekennzeichnet, daß** die Höhe (H) des Opferelements (31, 51) bezüglich der es umgebenden Oberfläche des Werkstücks (1, 3) oder der Werkstücke (1, 3) räumlich veränderlich ist.

15. Verfahren nach Anspruch 14,
**dadurch gekennzeichnet, daß** das Opferelement (31, 51) keilförmig ist.

16. Verfahren nach einem der Ansprüche 1 bis 15,
**dadurch gekennzeichnet, daß** der Reibdorn (23) in das Opferelement (31, 51) in Richtung zunehmender Höhe (H) des Opferelements (31, 51) hineingeführt wird.

17. Verfahren nach einem der Ansprüche 1 bis 16,
**dadurch gekennzeichnet, daß** der Reibdorn (23) der Kontur des Opferelements (31, 51) folgend gesteuert angehoben wird.

18. Vorrichtung (62) zum Verschweißen zweier Werkstücke (1, 3), die eine Verbindungszone (5) zwischen sich begrenzen, insbesondere zur Durchführung des Verfahrens nach einem der Ansprüche 1 bis 17,
mit einem in die Verbindungszone (5) zustellbaren und in ein Opferelement (31, 51) einführbaren Reibdorn (23) und **gekennzeichnet durch** eine Steuereinrichtung (64), mit der der Reibdorn (23) gesteuert und einer Kontur des Opferelements (31, 51) folgend aus dem Werkstück (1, 3) oder den Werkstücken (1, 3) zurückziehbar ist, und mit der gleichzeitig eine Vorschubbewegung (41) des Reibdorns (23) ausführbar ist.

19. Vorrichtung (62) nach Anspruch 18,
**dadurch gekennzeichnet, daß** der Reibdorn (23) in Abhängigkeit des in Vorschubrichtung (41) zurückgelegten Wegs automatisiert zurückziehbar ist.

20. Vorrichtung (62) nach Anspruch 19,
**gekennzeichnet durch** einen den Weg abtastenden und die Zurückziehbewegung (43) des Reibdorns (23) steuernden Tastkörper (68).

21. Vorrichtung (62) nach Anspruch 20,
**dadurch gekennzeichnet, daß** der Tastkörper (68) und der Reibdorn (23) über einen Steuerzylinder (72) in Verbindung stehen.

22. Vorrichtung (62) nach einem der Ansprüche 18 bis 21,
**dadurch gekennzeichnet, daß** der Reibdorn (23) einer der Steuereinrichtung (64) fest aufgeprägten Steuerkurve (80) folgend zurückziehbar ist.

23. Werkstück (1) zur Durchführung des Verfahrens nach Anspruch 2 und optional nach einem der Ansprüche 4 bis 6 oder 9 bis 17, mit einem angeformten, keilförmigen Opferbereich (51) und mit einer für eine Schweißverbindung vorgesehenen Seitenfläche (1A), wobei der Opferbereich (51) mit seiner Spitze unmittelbar an die Seitenfläche (1A) angrenzt.

## Claims

1. Method of welding two workpieces (1, 3) which define a connecting zone (5) between them,
a) a friction pin (23) being fed at a starting point (7) into the connecting zone (5) and into opposite regions of the workpieces (1, 3) on both sides of the connecting zone (5),
b) the friction pin (23) being moved in a welding direction (25) along the connecting zone (5) with the workpieces (1, 3) being welded,
c) the friction pin (23) being led out of the connecting zone (5) after the welding of the workpieces (1, 3), and **characterized in that**
d) at the same time - or after a forward movement (55) in one of the workpieces (1, 3) - said friction pin (23) being fed into a sacrificial element (31, 51) while being lifted (43).

2. Method according to Claim 1, **characterized in that** the sacrificial element is integrally formed on one of the workpieces (1, 3) as an integral part of this workpiece in such a way as to form a sacrificial region (51).

3. Method according to Claim 1, **characterized in that** the sacrificial element is designed as a separate sacrificial body (31) which is attached so as to be adjacent to at least one of the workpieces (1, 3).

4. Method according to one of Claims 1 to 3, **characterized in that** the connecting zone (5) has a shape closed upon itself, in particular a ring shape (Figures 4 to 8).

5. Method according to Claim 4, **characterized in that** the friction pin (23), after completely covering the connecting zone (5), is moved beyond the starting point (7).

6. Method according to Claim 4 or 5, **characterized in that** the sacrificial element (31, 51) - as viewed in the welding direction (25) - is attached behind the starting point (7) (Figures 5, 7).

7. Method according to Claim 3 and one of Claims 4 to 6, **characterized in that** the sacrificial element (31) is attached at the starting point (7), or at a point which has already been passed by the friction pin (23), after the friction pin (23) has already been moved in the welding direction (25) (Figure 7).

8. Method according to Claim 3 or one of Claims 4 to 6, **characterized in that** the sacrificial element (31) - as viewed in the welding direction (25) - is attached laterally next to the starting point (7), or next to a point which has already been passed by the friction pin (23), after the friction pin (23) has already been moved in the welding direction (25) (Figure 5).

9. Method according to one of Claims 1 to 8, **characterized in that** the sacrificial element (31, 51) is attached at a distance (A) from the connecting zone (5) of less than the diameter (D) of the friction pin (23) or so as to be directly adjacent to the connecting zone (5).

10. Method according to one of Claims 1 to 9, **characterized in that** the sacrificial element (31, 51) - as viewed in the welding direction (25) - is attached laterally next to the connecting zone (5) (Figures 2, 3, 5).

11. Method according to one of Claims 1 to 10, **characterized in that** the sacrificial element (31, 51) is removed after the welding of the workpieces (1, 3).

12. Method according to one of Claims 1 to 11, **characterized in that** a feed movement (41) of the friction pin (23) is maintained during the lifting (43) of the friction pin (23).

13. Method according to one of Claims 1 to 12, **characterized in that** the height (H) of the sacrificial element (31, 51) relative to that surface of the workpiece (1, 3) or of the workpieces (1, 3) which surrounds it is greater than the weld depth (T) produced.

14. Method according to one of Claims 1 to 13, **characterized in that** the height (H) of the sacrificial element (31, 51) relative to that surface of the workpiece (1, 3) or of the workpieces (1, 3) which surrounds it is spatially variable.

15. Method according to Claim 14, **characterized in that** the sacrificial element (31, 51) is wedge-shaped.

16. Method according to one of Claims 1 to 15, **characterized in that** the friction pin (23) is fed into the sacrificial element (31, 51) in the direction of increasing height (H) of the sacrificial element (31, 51) .

17. Method according to one of Claims 1 to 16, **characterized in that** the friction pin (23) is lifted in a controlled manner in such a way as to follow the contour of the sacrificial element (31, 51).

18. Apparatus (62) for welding two workpieces (1, 3) which define a connecting zone (5) between them, in particular for carrying out the method according to one of Claims 1 to 17, having a friction pin (23) which can be advanced into the connecting zone (5) and can be fed into a sacrificial element (31, 51), **characterized by** a control device (64) with which the friction pin (23) can be withdrawn from the workpiece (1, 3) or the workpieces (1, 3) in a controlled manner and in such a way as to follow a contour of the sacrificial element (31, 51), and with which a feed movement (41) of the friction pin (23) can be performed at the same time.

19. Apparatus (62) according to Claim 18, **characterized in that** the friction pin (23) can be withdrawn in an automated manner as a function of the path covered in the feed direction (41).

20. Apparatus (62) according to Claim 19, **characterized by** a scanning body (68) scanning the path and controlling the withdrawal movement (43) of the friction pin (23).

21. Apparatus (62) according to Claim 20, **characterized in that** the scanning body (68) and the friction pin (23) are connected via a control cylinder (72).

22. Apparatus (62) according to one of Claims 18 to 21, **characterized in that** the friction pin (23) can be withdrawn in such a way as to follow a cam (80) firmly superimposed on the control device (64).

23. Workpiece (1) for carrying out the method according to Claim 2 and optionally according to one of Claims 4 to 6 or 9 to 17, having an integrally formed, wedge-shaped sacrificial region (51) and a side face (1A) intended for a welded connection, the sacrificial region (51) being directly adjacent to the side face (1A) by means of its tip.

## Revendications

1. Procédé de soudage de deux pièces (1, 3) qui délimitent entre elles une zone (5) de liaison,
a) dans lequel on introduit un mandrin (23) de frottement en un point (7) de début dans la zone (5) de liaison et dans des régions opposées l'une à l'autre des pièces (1, 3) sur deux côtés de la zone (5) de liaison,
b) on déplace le mandrin (23) de frottement en soudant les pièces (1, 3) dans une direction (25) de soudage le long de la zone (5) de liaison,
c) on ressort le mandrin (23) de frottement de la zone (5) de soudage après le soudage des pièces (1, 3), et **caractérisé en ce que**
d) alors - ou après un mouvement (55) d'avance dans l'une des pièces (1, 3) - on l'introduit en le soulevant (43) dans un élément (31, 51) sacrificiel.

2. Procédé suivant la revendication 1,
**caractérisé en ce que** l'élément sacrificiel est issu, en tant que partie constitutive de l'une des pièces (1, 3), de celle-ci en formant une région (51) sacrificielle.

3. Procédé suivant la revendication 1,
**caractérisé en ce que** l'élément sacrificiel est constitué sous la forme d'un corps (31) sacrificiel distinct qui est adjacent à au moins l'une des pièces (1, 3).

4. Procédé suivant l'une des revendications 1 à 3,
**caractérisé en ce que** la zone (5) de liaison a une forme en soi fermée, notamment une forme annulaire (figures 4 à 8).

5. Procédé suivant la revendication 4,
**caractérisé en ce que** l'on déplace le mandrin (23) de frottement après une traversée complète de la zone (5) de liaison au-delà du point (7) de début.

6. Procédé suivant la revendication 4 ou 5,
**caractérisé en ce que** l'on met l'élément (31, 51) sacrificiel derrière - tel que considéré suivant le sens (25) de soudage - le point (7) de début (figures 5, 7).

7. Procédé suivant la revendication 3 et suivant l'une des revendications 4 à 6,
**caractérisé en ce que** l'on met le corps (31) sacrificiel au point (7) de début ou en un point où le mandrin (23) de frottement a déjà passé, après que le mandrin (23) de frottement a été déjà déplacé dans le sens (25) de soudage (figure 7).

8. Procédé suivant la revendication 3 et suivant l'une des revendications 4 à 6,
**caractérisé en ce que** l'on met le corps (31) sacrificiel latéralement - tel que considéré dans le sens (25) de soudage - à côté du point (7) de début ou à côté d'un point où le mandrin (23) de frottement a déjà passé, après que le mandrin (23) a été déjà déplacé dans le sens (25) de soudage (figure 5).

9. Procédé suivant l'une des revendications 1 à 8,
**caractérisé en ce que** l'on met l'élément (31, 51) sacrificiel à une distance (A) de la zone (5) de liaison inférieure au diamètre (D) du mandrin (23) de frottement ou de manière à ce qu'il soit directement adjacent à la zone (5) de liaison.

10. Procédé suivant l'une des revendications 1 à 9,
**caractérisé en ce que** l'on met l'élément (31, 51) sacrificiel latéralement - tel que vu dans le sens (25) de soudage - à côté de la zone (5) de liaison (figures 2, 3, 5).

11. Procédé suivant l'une des revendications 1 à 10,
**caractérisé en ce que** l'on enlève l'élément (31, 51) sacrificiel après le soudage des pièces (1, 3).

12. Procédé suivant l'une des revendications 1 à 11,
**caractérisé en ce que** pendant que l'on soulève (43) le mandrin (23) de frottement, on maintient un mouvement (41) d'avance du mandrin (23) de frottement.

13. Procédé suivant l'une des revendications 1 à 12,
**caractérisé en ce que** la hauteur (H) de l'élément (31, 51) sacrificiel par rapport à la surface qui l'entoure de la pièce (1, 3) ou des pièces (1, 3) est plus grande que la profondeur (T) du cordon de soudure produit.

14. Procédé suivant l'une des revendications 1 à 13,
**caractérisé en ce que** la hauteur (H) de l'élément (31, 51) sacrificiel par rapport à la surface qui l'entoure de la pièce (1, 3) ou des pièces (1, 3) peut être modifiée dans l'espace.

15. Procédé suivant la revendication 14,
**caractérisé en ce que** l'élément (31, 51) sacrificiel est cunéiforme.

16. Procédé suivant l'une des revendications 1 à 15,
**caractérisé en ce que** l'on enfonce le mandrin (23) de frottement dans l'élément (31, 51) sacrificiel à une hauteur (H), croissante en direction, de l'élément (31, 51) sacrificiel.

17. Procédé suivant l'une des revendications 1 à 16,
**caractérisé en ce que** l'on soulève le mandrin (23) de frottement de manière commandée, en suivant le contour de l'élément (31, 51) sacrificiel.

18. Dispositif (62) de soudage de deux pièces (1, 3) qui délimitent entre elles une zone (5) de liaison, notamment pour la mise en oeuvre du procédé suivant l'une des revendications 1 à 17,
comprenant un mandrin (23) de frottement pouvant être amené dans la zone (5) de liaison et introduit dans un élément (31, 51) sacrificiel et **caractérisé par** un dispositif (64) de commande, par lequel le mandrin (23) de frottement peut être retiré de manière commandée et en suivant un contour de l'élément (31, 51) sacrificiel sous la pièce (1, 3) ou les pièces (1, 3), et par lequel en même temps un mouvement (41) d'avance du mandrin (23) de frottement peut être réalisé.

19. Dispositif (62) suivant la revendication 18,
**caractérisé en ce que** le mandrin (23) de frottement peut être retiré de manière automatique en fonction du trajet parcouru dans le dispositif (41) d'avance.

20. Dispositif (62) suivant la revendication 19,
**caractérisé par** une pièce (68) de palpage détectant le trajet commandant le mouvement (43) de retrait du mandrin (23) de frottement.

21. Dispositif (62) suivant la revendication 20,
**caractérisé en ce que** la pièce (68) de palpage et le mandrin (23) de frottement sont en liaison par un vérin (72) de commande.

22. Dispositif (62) suivant l'une des revendications 18 à 21,
**caractérisé en ce que** le mandrin (23) de frottement peut être retiré en suivant une pièce (80) de commande imprimée de manière fixe par le dispositif (64) de commande.

23. Pièce (1) pour la mise en oeuvre du procédé suivant la revendication 2 et éventuellement suivant l'une des revendications 4 à 6 ou 9 à 17, comprenant une région (51) sacrificielle cunéiforme qui en est issue et une face (1A) latérale prévue pour une liaison soudée, la région (51) sacrificielle étant voisine par sa pointe directement de la face (1A) latérale.
